# EUROPÄISCHE PATENTSCHRIFT

(11) **EP 2 789 538 B1**
(45) Veröffentlichungstag und Bekanntmachung des Hinweises auf die Patenterteilung: **27.05.2015**
(21) Anmeldenummer: 14155793.4
(22) Anmeldetag: 19.02.2014
(51) Int. Cl.: B65B 25/06, B26D 7/32, B65G 47/08

(54) **Vorrichtung zum Komplettieren eines Formatsatzes von Produkten**
Device for completing a format set of products
Dispositif permettant de compléter un jeu de formats de produits

(30) Priorität: 08.04.2013 DE 102013206138
(43) Veröffentlichungstag der Anmeldung: 15.10.2014
(73) Patentinhaber: Weber Maschinenbau GmbH Breidenbach, 35236 Breidenbach (DE)
(72) Erfinder: Bauer, Sigfrid, 17091 Groß Teetzleben (DE)
(74) Vertreter: Manitz, Finsterwald & Partner GbR

(56) Entgegenhaltungen:
- EP-A1- 2 030 898
- EP-A1- 2 420 460
- DE-A1- 10 143 506

## Beschreibung

Die vorliegende Erfindung betrifft eine Vorrichtung zum Komplettieren eines Formatsatzes von Produkten, insbesondere Lebensmittelprodukten, welche zeilenweise auf mehreren Förderspuren entlang einer Förderrichtung gefördert werden.

Moderne Hochleistungs-Slicer sind in der Lage, gleichzeitig von mehreren Lebensmittelprodukten wie z.B. Wurstriegeln oder Käselaiben mit hoher Schnittgeschwindigkeit einzelne Produktscheiben abzutrennen. Solche abgetrennten Produktscheiben sowie aus mehreren z.B. gestapelten oder geschindelten Produktscheiben bestehende Produktportionen werden üblicherweise mehrspurig entlang einer Förderstrecke mittels Fördereinrichtungen wie Band- oder Riemenförderern von dem Slicer abtransportiert und einer nachfolgenden Verarbeitungseinrichtung wie einer Verpackungsmaschine zugeführt. Die gewünschte Gruppierung der Produkte oder Produktportionen (im Folgenden einfach: Produkte) auf der Förderstrecke wird als Formatsatz bezeichnet. Hierbei kann es sich um eine einzelne Produktzeile oder um eine komplexe Anordnung wie eine Matrix aus mehreren Zeilen und mehreren Förderspuren handeln.

Die EP 2 420 460 A1 offenbart eine Förderanlage mit einem Stoppförderer, einer Querfördereinheit und einem Gruppierförderer. Sowohl bei dem Stoppförderer als auch bei dem Gruppierförderer sind mehrere Spuren vorgesehen, welche unabhängig voneinander betreibbar sind.

Bei Vorrichtungen der genannten Art kann es aus verschiedenen Gründen zu Fehlstellen in einzelnen Produktzeilen und somit zu unvollständigen Formatsätzen kommen. Um das unerwünschte Verpacken solcher unvollständiger Formatsätze zu verhindern, können diese aussortiert und einer Korrekturförderspur zugeführt werden, auf welcher eine Vervollständigung der Formatsätze erfolgt. Dieses Vervollständigen kann manuell erfolgen oder automatisch, beispielsweise mittels eines Roboters. Beide Vorgehensweisen sind jedoch mit hohen Kosten verbunden.

Eine Vorrichtung zum Komplettieren eines Formatsatzes von Produkten kann einen ersten und einen zweiten Stoppförderer umfassen, welche in Förderrichtung gesehen hintereinander angeordnet sind und dazu ausgebildet sind, auf allen Förderspuren Produkte entlang der Förderrichtung zu fördern, wobei der erste und der zweite Stoppförderer ferner in der Lage sind, bei Bedarf auf wenigstens einer Förderspur ein gefördertes Produkt anzuhalten, während auf wenigstens einer anderen Förderspur ein Produkt weitergefördert wird. Weiterhin kann eine solche Vorrichtung einen in Förderrichtung gesehen zwischen dem ersten Stoppförderer und zweiten Stoppförderer angeordneten Verteilerförderer umfassen, welcher dazu ausgebildet ist, wenigstens ein Produkt entlang der Förderrichtung zu fördern, wobei der Verteilerförderer quer zu der Förderrichtung verschiebbar ist.

Mittels des querverschiebbaren Verteilerförderers können ankommende Produkte auf andere Förderspuren umgesetzt werden. Somit kann ein unvollständiger Formatsatz auf dem zweiten Stoppförderer vorübergehend abgelegt - also gewissermaßen geparkt - werden und an dieser Stelle durch Produkte aus nachfolgend geförderten unvollständigen Formatsätzen ergänzt werden. Hierfür werden die nachfolgenden Produkte einzeln oder in Gruppen mittels des Verteilerförderers an die entsprechenden Fehlstellen des geparkten Formatsatzes gefahren. Auf dem ersten Stoppförderer werden unterdessen weitere Produkte eines nachfolgenden unvollständigen Formatsatzes bereitgehalten.

Es ist eine Aufgabe der Erfindung, ein einfaches und effektives Komplettieren von unvollständigen Formatsätzen zu ermöglichen.

Die Lösung der Aufgabe erfolgt durch eine Vorrichtung mit den Merkmalen des Anspruchs 1.

Der erste Stoppförderer und der zweite Stoppförderer sind erfindungsgemäß als Riemenförderer ausgebildet, welche zum bedarfsweisen Anhalten von Produkten auf einzelnen Förderspuren Stopper mit zwischen den Riemen hindurch greifenden Produkthebevorrichtungen aufweisen. Solche Stopper ermöglichen ein zuverlässiges Anhalten eines Produkts, während der Riemenförderer weiterläuft.

Die Erfindung ermöglicht eine automatische Komplettierung unvollständiger Formatsätze unter prinzipieller Aufrechterhaltung des Förderflusses. Ein besonderer Vorteil der Erfindung besteht darin, dass kein Produktspeicher zum Vorhalten von Ergänzungsprodukten vorgesehen sein muss, da zum Komplettieren ausschließlich Produkte aus nachrückenden unvollständigen Formatsätzen verwendet werden.

Weiterbildungen der Erfindung sind in den abhängigen Ansprüchen, der Beschreibung sowie der beigefügten Zeichnung angegeben.

Eine Ausführungsform der Erfindung sieht vor, dass der erste Stoppförderer, der zweite Stoppförderer und/oder der Verteilerförderer quer zu der

Förderrichtung gesehen ungeteilt ausgeführt ist/sind. Dies ermöglicht eine besonders einfache Konstruktion und einen geringen Herstellungsaufwand. Hierbei kann "ungeteilt" insbesondere bedeuten, dass der betreffende Förderer nicht spurindividuell betrieben werden kann und insbesondere nur einen einzigen Antrieb z.B. für ein einziges durchgehendes Endlosband oder für ausschließlich gemeinsam antreibbare und gemeinsam die gesamte Förderbreite abdeckende Förderriemen aufweist. Alternativ ist es aber möglich, den betreffenden Förderer so auszubilden, d.h. zu teilen, dass er zu einem spurindividuellen Betrieb in der Lage ist und hierzu insbesondere mehrere Antriebe aufweist, insbesondere für jede Spur einen eigenen Antrieb.

Eine weitere Ausführungsform der Erfindung sieht vor, dass der erste Stoppförderer, der zweite Stoppförderer und/oder der Verteilerförderer ausschließlich in Förderrichtung antreibbar ist/sind. Mit anderen Worten ist es bevorzugt, dass die genannten Förderer während des Komplettierungsvorgangs nicht entgegen der Förderrichtung, also rückwärts, betrieben werden. Dies ist auch in dem Sinne gemeint, dass eine Steuereinrichtung der Vorrichtung dafür sorgt, dass der erste Stoppförderer, der zweite Stoppförderer und/oder der Verteilerförderer lediglich in Vorwärtsrichtung betrieben werden, auch wenn diese von den mechanischen Gegebenheiten her grundsätzlich rückwärts fördern könnten.

Weiterhin ist es bevorzugt, dass der Verteilerförderer eine geringere Anzahl an Förderspuren aufweist als der erste Stoppförderer und/oder der zweite Stoppförderer, wobei insbesondere der Verteilerförderer eine Breite aufweist, die einer oder zwei Förderspuren entsprechen. Zum Komplettieren einer unvollständigen Produktzeile ist es nämlich nicht zwingend erforderlich, eine nachfolgende Produktzeile vollständig quer zu der Fördernchtung zu verschieben. Vielmehr reicht es in vielen praktischen Fällen aus, lediglich ein oder zwei nebeneinander befindliche Produkte quer zu der Förderrichtung zu verschieben. Durch eine Begrenzung der Förderbreite des Verteilerförderers kann insbesondere erreicht werden, dass dieser auch nach einem Querverschieben nicht über die Außenabmessungen der Stoppförderer hinausragt. Somit kann der Platzbedarf der Gesamtvorrichtung auch quer zu der Förderrichtung gesehen gering gehalten werden.

Der Verteilerförderer kann gemäß einer weiteren Ausführungsform der Erfindung eine auf die Förderrichtung bezogene Länge aufweisen, die gerade zur Aufnahme eines Produkts ausreicht und/oder die kleiner ist als die Länge des ersten und/oder des zweiten Stoppförderers. Hierdurch kann insbesondere der Platzbedarf der Vorrichtung in Förderrichtung gesehen begrenzt werden.

Gemäß einer weiteren Ausführungsform der Erfindung schließen der erste Stoppförderer, der Verteilerförderer und der zweite Stoppförderer unmittelbar aneinander an. Zur Begrenzung des Herstellungsaufwands ist es also bevorzugt, dass keine dazwischen liegenden Förderer oder Puffereinrichtungen vorgesehen sind. Bei Bedarf können der erste Stoppförderer, der Verteilerförderer und der zweite Stoppförderer auch geringfügig überlappen. Eine überlappungsfreie Anordnung ermöglicht jedoch einen vereinfachten Austausch des Verteilerförderers.

Es kann auch eine Produkt-Erfassungseinrichtung vorgesehen sein, um die Anzahl und/oder die Position der dem ersten Stoppförderer zugeführten Produkte zu erfassen. Diese Erfassungseinrichtung kann beispielsweise an einem dem ersten Stoppförderer vorangehenden Eingangsförderer angeordnet sein. Z.B. könnten alle eingehenden Formatsätze mittels einer Kamera und einer dieser zugeordneten Bildverarbeitungseinrichtung analysiert werden. Auf diese Weise können unvollständige Formatsätze schnell und zuverlässig erkannt werden. Ferner kann mittels einer Steuereinrichtung auf der Basis von Daten der Erfassungseinrichtung auf einfache Weise eine günstige Vorgehensweise beim Komplettieren festgelegt werden.

Der erste Stoppförderer und/oder der zweite Stoppförderer können auch dazu ausgebildet sein, zur Berücksichtigung eines Spurversatzes und/oder unterschiedlicher Breiten ein an einer beliebigen Querposition befindliches Produkt anzuhalten. Dies ermöglicht eine besonders hohe Flexibilität bei der Handhabung unvollständiger Formatsätze, insbesondere dann, wenn Produkte gegenüber den vorgegebenen Förderspur-Positionen versetzt sind und angehalten werden sollen.

Bevorzugt ist der Verteilerförderer an jede beliebige Querposition verschiebbar. Mit anderen Worten ist es bevorzugt, dass der Verteilerförderer nicht nur an den vorgegebenen Förderspur-Positionen anhalten - quasi "einrasten" - kann, sondern stufenlos und kontinuierlich innerhalb des durch die Förderspuren vorgegebenen Gesamtbereichs verschiebbar ist. Somit können auch Produkte bzw. Formatsätze gehandhabt werden, die - aus welchen Gründen auch immer - einen Versatz zu den vorgegebenen Förderspuren aufweisen.

Die Erfindung betrifft auch eine Vorrichtung zum Fördern von Produkten, insbesondere Lebensmittelprodukten, mit wenigstens einer Hauptförderstrecke, auf welche die Produkte zeilenweise entlang einer Förderrichtung gefördert werden, wenigstens einer Nebenförderstrecke zum bedarfsweisen Komplettieren unvollständiger Produktzeilen und wenigstens einer Ausschleuseinrichtung zum Ausschleusen unvollständiger Produktzeilen von der Hauptförderstrecke auf die Nebenförderstrecke.

Erfindungsgemäß ist in die Nebenförderstrecke wenigstens eine Vorrichtung wie vorstehend beschrieben integriert. Auf der Nebenförderstrecke kann somit ein einfaches und schnelles Komplettieren unvollständiger Formatsätze erfolgen. Die vervollständigten Formatsätze können dann mittels einer Einschleuseinrichtung wieder der Hauptförderstrecke zugeführt und z.B. verpackt werden.

Die Erfindung betrifft weiterhin ein Verfahren zum Komplettieren eines Formatsatzes von Produkten, insbesondere Lebensmittelprodukten, welche zeilenweise auf mehreren Förderspuren entlang einer Förderrichtung gefördert werden.

Hierbei können folgende Schritte vorgesehen sein:
- Fördern zumindest eines ersten Produkts einer unvollständigen Produktzeile auf einer ersten Förderspur von einem ersten Stoppförderer auf einen Verteilerförderer unter Anhalten wenigstens eines Produkts der unvollständigen Produktzeile auf dem ersten Stoppförderer auf einer anderen Förderspur,
- Verschieben des Verteilerförderers quer zu der Förderrichtung,
- Fördern des ersten Produkts von dem verschobenen Verteilerförderer auf einen zweiten Stoppförderer, und
- Fördern zumindest eines weiteren Produkts der unvollständigen Produktzeile oder einer nachfolgenden Produktzeile auf den zweiten Stoppförderer über den Verteilerförderer, während das erste Produkt auf dem zweiten Stoppförderer angehalten wird.

Durch das vorübergehende Ablegen oder "Parken" einer unvollständigen Produktzeile auf dem zweiten Stoppförderer ist es z.B. möglich, auf die Ankunft einer weiteren unvollständigen Produktzeile am ersten Stoppförderer zu warten und Produkte aus dieser weiteren unvollständigen Produktzeile dann durch Querverschiebung des Verteilerförderers an die Fehlstellen der auf dem zweiten Stoppförderer geparkten unvollständigen Produktzeile zu fördern. Hierfür nicht benötigte Produkte der nachfolgenden unvollständigen Produktzeile werden hierbei auf dem ersten Stoppförderer geparkt. Auf diese Weise ist es möglich, die Produkte aus allen eingehenden unvollständigen Produktzeilen zum Erstellen vollständiger Formatsätze zu nutzen. Ein separates Reservoir an Produkten für den Komplettierungsvorgang ist hierbei nicht erforderlich.

Hierbei wird der Umstand ausgenutzt, dass es bei modernen Lebensmittelverarbeitungsanlagen nur vergleichsweise selten zur Bildung unvollständiger Formatsätze kommt. Auf der Korrekturförderstrecke ist es daher im Allgemeinen nicht notwendig, jeden ankommenden unvollständigen Formatsatz sofort weiter zu fördern.

Erfindungsgemäß wird das Anhalten von Produkten auf dem ersten Stoppförderer und auf dem zweiten Stoppförderer mittels jeweiliger Stopper durchgeführt, welche Produkthebevorrichtungen aufweisen, die zwischen den Riemen der als Riemenförderer ausgebildeten Stoppförderer hindurchgreifen.

Vorzugsweise wird der Verteilerförderer vor dem Fördern des weiteren Produkts auf den zweiten Stoppförderer erneut quer zu der Förderrichtung verschoben. Auf diese Weise ist es möglich, eine unvollständige Produktzeile mit mehreren Fehlstellen Schritt für Schritt zu vervollständigen.

Eine spezielle Ausgestaltung der Erfindung sieht ferner vor, dass wenigstens ein Produkt einer ersten Produktzeile von dem ersten Stoppförderer, dem Verteilerförderer oder dem zweiten Stoppförderer auf einen nachfolgenden Förderer gefördert wird, während gleichzeitig wenigstens ein Produkt einer zweiten nachfolgenden Produktzeile von einem vorangehenden Förderer auf den ersten Stoppförderer, den Verteilerförderer oder den zweiten Stoppförderer gefördert wird. Beispielsweise kann eine erste Produktzeile von dem ersten Stoppförderer auf den Verteilerförderer gefördert werden, während gleichzeitig eine zweite nachfolgende Produktzeile von einem Eingangsförderer auf den ersten Stoppförderer gefördert wird. Oder es kann eine erste Produktzeile von dem zweiten Stoppförderer auf einen Ausgangsförderer gefördert werden, während gleichzeitig eine zweite nachfolgende Produktzeile von dem Verteilerförderer auf den zweiten Stoppförderer gefördert wird. Eine derartige Vorgehensweise ermöglicht ein besonders schnelles und effektives Komplettieren unvollständiger Formatsätze.

Die Erfindung wird nachfolgend beispielhaft unter Bezugnahme auf die Zeichnung beschrieben.
- Fig. 1: zeigt in schematischer Form eine Lebensmittel-Produktionslinie, welche eine erfindungsgemäße Vorrichtung zum Fördern von Lebensmittelprodukten mit einer Hauptförderstrecke, einer Nebenförderstrecke und einer in der Nebenförderstrecke angeordneten Vorrichtung zum Komplettieren eines Formatsatzes von Lebensmittelprodukten umfasst.
- Fig. 2: ist eine vereinfachte Draufsicht auf eine erfindungsgemäße Vorrichtung zum Komplettieren eines Formatsatzes von Lebensmittelprodukten.

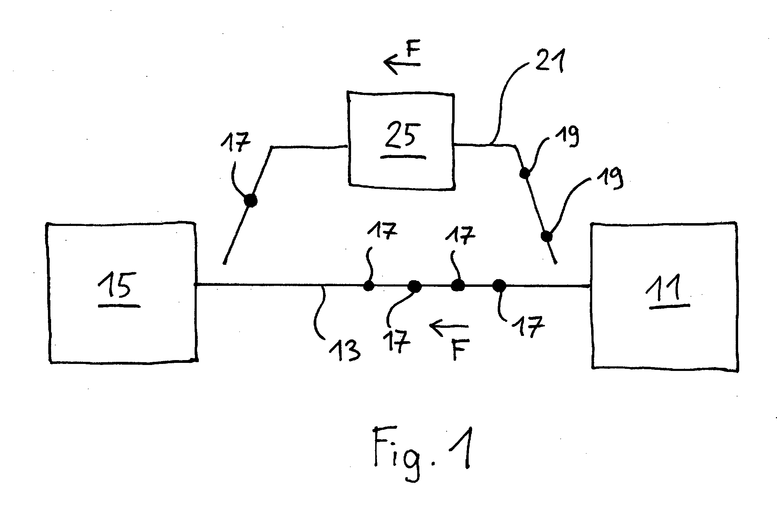

Die in Fig. 1 dargestellte Produktionslinie zum Erstellen von Lebensmittelprodukten umfasst einen Hochleistungs-Slicer 11, der dazu ausgebildet ist, Lebensmittelprodukte auf mehreren Spuren gleichzeitig in Scheiben zu schneiden. Die abgetrennten Produktscheiben werden - gegebenenfalls zu Produktportionen gestapelt - mittels geeigneter Fördereinrichtungen, wie Band- oder Riemenförderern in einer Förderrichtung F entlang einer Hauptförderstrecke 13 von dem Hochleistungs-Slicer 11 weggefördert und z.B. einer Verpackungsmaschine 15 zugeführt. Aufgrund des mehrspurigen Aufschneidens ergeben sich in Fig. 1 lediglich als Punkte dargestellte Produktzeilen 17 aus mehreren nebeneinander geförderten Produktscheiben oder Portionsstapeln. Eine einzelne Produktzeile 17 oder eine Anordnung aus mehreren aufeinanderfolgenden Produktzeilen 17 bildet hierbei einen Formatsatz, d.h. eine vorgegebene Anordnung von Produkten oder Produktportionen, auf welche die Verpackungsmaschine 15 abgestimmt ist.

Aus verschiedenen Gründen kann es dazu kommen, dass von dem Hochleistungs-Slicer 11 eine unvollständige Produktzeile 19 abgeht. Um ein unerwünschtes Verpacken einer solchen unvollständigen Produktzeile 19 in der Verpackungsmaschine 15 zu vermeiden, werden alle unvollständigen Produktzeilen 19 mittels einer in Fig. 1 nicht dargestellten Ausschleuseinrichtung, beispielsweise in Form einer Wippe, auf eine Nebenförderstrecke 21 geleitet. Auf der Nebenförderstrecke 21 werden die unvollständigen Produktzeilen 19 dann einer Komplettierungsvorrichtung 25 zugeführt, welche zum automatischen Vervollständigen der unvollständigen Produktzeilen 19 ausgebildet ist. Nach dem Vervollständigen werden die von der Komplettierungsvorrichtung 25 abgehenden vollständigen Produktzeilen 17 über eine in Fig. 1 ebenfalls nicht dargestellte Einschleuseinrichtung, bei der es sich wiederum um eine Wippe handeln kann, wieder der Hauptförderstrecke 13 und schließlich der Verpackungsmaschine 15 zugeführt. Das Erkennen von unvollständigen Produktzeilen 19 kann z.B. unmittelbar nach dem Hochleistungs-Slicer 11 mittels einer Produkt-Erfassungseinrichtung wie eines Kamerasystems oder einer Waage erfolgen, was in Fig. 1 ebenfalls nicht dargestellt ist. Im Ergebnis ist bei der dargestellten Produktionslinie sichergestellt, dass der Verpackungsmaschine 15 ausschließlich vollständige Produktzeilen 17 bzw. vollständige Formatsätze zugeführt werden.

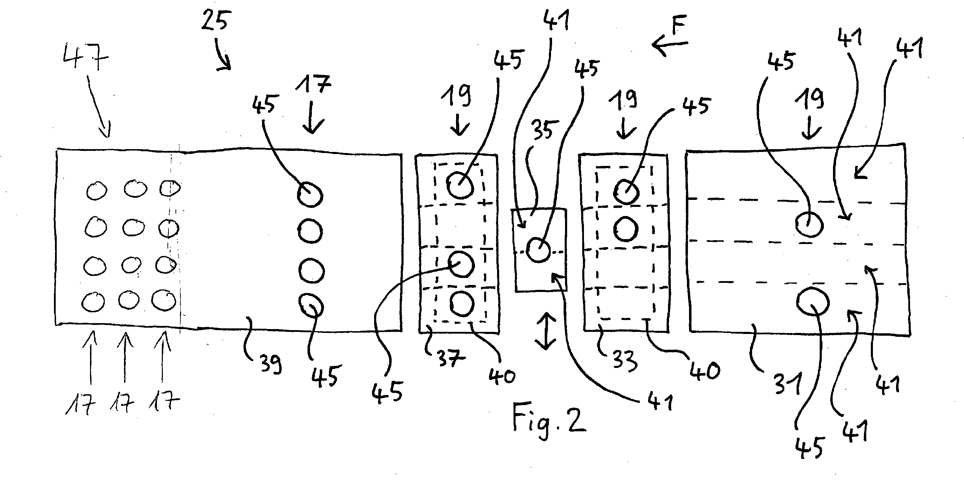

Die Funktionsweise der Komplettierungsvorrichtung 25 wird nachfolgend unter Bezugnahme auf Fig. 2 detailliert beschrieben. Speziell umfasst die Komplettierungsvorrichtung 25 einen Eingangsförderer 31, einen ersten Stoppförderer 33, einen Verteilerförderer 35, einen zweiten Stoppförderer 37 sowie einen Ausgangsförderer 39, welche in dieser Reihenfolge unmittelbar aufeinander folgend in der Förderrichtung F gesehen hintereinander angeordnet sind. Alle genannten Förderer können als Band-, Riemen- oder Rollenförderer ausgebildet sein. Der erste Stoppförderer 33 und der zweite Stoppförderer 37 sind mit lediglich schematisch dargestellten Stoppern 40 versehen und daher in der Lage, bei Bedarf auf wenigstens einer Förderspur 41 ein gefördertes Einzelprodukt 45, also eine Scheibe oder einen Scheibenstapel, anzuhalten, während auf wenigstens einer anderen Förderspur 41 ein Einzelprodukt 45 weitergefördert wird. Wie durch den Doppelpfeil verdeutlicht ist, kann der Verteilerförderer 35 quer zu der Förderrichtung F kontinuierlich, d.h. stufenlos, verschoben werden. Der Eingangsförderer 31, der erste Stoppförderer 33, der Verteilerförderer 35, der zweite Stoppförderer 37 und der Ausgangsförderer 39 sind jeweils quer zu der Förderrichtung F gesehen ungeteilt ausgeführt. Weiterhin sind die genannten Förderer ausschließlich in Förderrichtung F antreibbar. Die Stopper 40 können beispielsweise als zwischen dem Riemen eines Riemenförderers hindurch greifende Produkthebevorrichtungen ausgebildet sein.

Wie dargestellt weist der Verteilerförderer 35 eine geringere Förderbreite auf als der erste Stoppförderer 33 und der zweite Stoppförderer 37. Konkret weist der Verteilerförderer 35 bei dem dargestellten Ausführungsbeispiel zwei Förderspuren 41 auf. Dies ist jedoch nicht zwingend, d.h. der Verteilerförderer 35 könnte auch lediglich eine einzelne Förderspur 41 oder mehr als zwei Förderspuren 41 aufweisen. Wie gezeigt kann auf dem Verteilerförderer 35 ein Einzelprodukt 45 auch unabhängig von den festgelegten Förderspuren 41 gefördert werden.

An der Komplettierungsvorrichtung 25 ankommende unvollständige Produktzeilen 19 werden zunächst von dem Eingangsförderer 31 auf den ersten Stoppförderer 33 gefördert. Von dem ersten Stoppförderer 33 wird dann beispielsweise ein erstes Einzelprodukt 45 der unvollständigen Produktzeile 19 auf den Verteilerförderer 35 gefördert, während die übrigen Einzelprodukte 45 der unvollständigen Produktzeile 19 auf dem ersten Stoppförderer 33 mittels der Stopper 40 festgehalten werden. Der Verteilerförderer 35 wird dann quer zu der Förderrichtung F verschoben, so dass das auf ihm befindliche Einzelprodukt 45 einer anderen Förderspur 41 zugeordnet ist. Auf dieser anderen Förderspur 41 wird das Einzelprodukt 45 dann von dem Verteilerförderer 35 auf den zweiten Stoppförderer 37 gefördert. Gleichzeitig wird ein weiteres Einzelprodukt 45 der auf dem ersten Stoppförderer 33 angehaltenen unvollständigen Produktzeile 19 auf den Verteilerförderer 35 gefördert, wobei dieser gegebenenfalls vorher erneut verschoben wird.

Sobald alle Einzelprodukte 45 von dem ersten Stoppförderer 33 entfernt sind, wird eine weitere unvollständige Produktzeile 19 von dem Eingangsförderer 31 auf den ersten Stoppförderer 33 gefördert. Auf dem zweiten Stoppförderer 37 werden Schritt für Schritt alle Förderspuren 41 mit Einzelprodukten 45 besetzt. Anschließend wird die nun vollständige Produktzeile 17 von dem zweiten Stoppförderer 37 auf den Ausgangsförderer 39 gefördert und letztlich wieder in die Hauptförderstrecke 13 (Fig. 1) eingeschleust. Sofern eine unvollständige Produktzeile 19 zwei nebeneinander befindliche Einzelprodukte 45 umfasst, können diese bei Bedarf auch gemeinsam auf den Verteilerförderer 35 und von diesem auf den zweiten Stoppförderer 37 gefördert werden.

Die beschriebene Vorgehensweise ermöglicht ein kontinuierliches Zusammenstellen vollständiger Produktzeilen 17 aus eingehenden unvollständigen Produktzeilen 19. Eine separate Zuführung von Einzelprodukten 45 aus einem Produktspeicher ist nicht erforderlich.

Wie Fig. 2 auch zeigt, können z.B. auf dem Ausgangsförderer oder an einer Stelle auf der Hauptförderstrecke 13 (vgl. Fig. 1) mehrere einzelne vollständige bzw. komplettierte Produktzeilen 17 zu einer Matrix 47 von Produkten zusammengestellt werden, also zu einem mehrzeiligen Formatsatz. Die Erfindung betrifft folglich auch eine Vorrichtung und ein Verfahren zum Erstellen oder Komplettieren mehrzeiliger Formatsätze sowie eine Vorrichtung und ein Verfahren zum Fördern von Produkten, die eine solche Erstellung bzw. Komplettierung mehrzeiliger Formatsätze ermöglicht.

### Bezugszeichenliste

- 11: Hochleistungs-Slicer
- 13: Hauptförderstrecke
- 15: Verpackungsmaschine
- 17: vollständige Produktzeile
- 19: unvollständige Produktzeile
- 21: Nebenförderstrecke
- 25: Komplettierungsvorrichtung
- 31: Eingangsförderer
- 33: erster Stoppförderer
- 35: Verteilerförderer
- 37: zweiter Stoppförderer
- 39: Ausgangsförderer
- 40: Stopper
- 41: Förderspur
- 45: Einzelprodukt
- 47: Formatsatz, Matrix

- F: Förderrichtung

## Patentansprüche

1. Vorrichtung (25) zum Komplettieren eines Formatsatzes (19) von Produkten (45), insbesondere Lebensmittelprodukten, welche zeilenweise auf mehreren Förderspuren (41) entlang einer Förderrichtung (F) gefördert werden, wobei die Vorrichtung (25) umfasst:
einen ersten und einen zweiten Stoppförderer (33, 37), welche in Förderrichtung (F) gesehen hintereinander angeordnet sind und dazu ausgebildet sind, auf allen Förderspuren (41) Produkte (45) entlang der Förderrichtung (F) zu fördern, wobei der erste und der zweite Stoppförderer (33, 37) ferner in der Lage sind, bei Bedarf auf wenigstens einer Förderspur (41) ein gefördertes Produkt (45) anzuhalten, während auf wenigstens einer anderen Förderspur (41) ein Produkt (45) weitergefördert wird, und
einen in Förderrichtung (F) gesehen zwischen dem ersten Stoppförderer (33) und dem zweiten Stoppförderer (37) angeordneten Verteilerförderer (35), welcher dazu ausgebildet ist, wenigstens ein Produkt (45) entlang der Förderrichtung (F) zu fördern, wobei der Verteilerförderer (35) quer zu der Förderrichtung (F) verschiebbar ist,
**dadurch gekennzeichnet, dass**
der erste Stoppförderer (33) und der zweite Stoppförderer (37) als Riemenförderer ausgebildet sind, welche zum bedarfsweisen Anhalten von Produkten (45) auf einzelnen Förderspuren (41) Stopper (40) mit zwischen den Riemen hindurchgreifenden Produkthebevorrichtungen aufweisen.

2. Vorrichtung nach Anspruch 1,
**dadurch gekennzeichnet, dass**
der erste Stoppförderer (33), der zweite Stoppförderer (37) und/oder der Verteilerförderer (35) quer zu der Förderrichtung (F) gesehen ungeteilt ausgeführt ist/ sind.

3. Vorrichtung nach Anspruch 1 oder 2,
**dadurch gekennzeichnet, dass**
der erste Stoppförderer (33), der zweite Stoppförderer (37) und/oder der Verteilerförderer (35) ausschließlich in Förderrichtung (F) antreibbar ist/sind.

4. Vorrichtung nach zumindest einem der vorstehenden Ansprüche,
**dadurch gekennzeichnet, dass**
der Verteilerförderer (35) eine geringere Anzahl an Förderspuren (41) aufweist als der erste Stoppförderer (33) und/oder der zweite Stoppförderer (37), wobei insbesondere der Verteilerförderer (35) eine Breite aufweist, die einer oder zwei Förderspuren (41) entspricht.

5. Vorrichtung nach zumindest einem der vorstehenden Ansprüche,
**dadurch gekennzeichnet, dass**
der Verteilerförderer (35) eine auf die Förderrichtung (F) bezogene Länge aufweist, die gerade zur Aufnahme eines Produktes (45) ausreicht und/oder die kleiner ist als die Länge des ersten und/oder des zweiten Stoppförderers (33, 37).

6. Vorrichtung nach zumindest einem der vorstehenden Ansprüche,
**dadurch gekennzeichnet, dass**
der erste Stoppförderer (33), der Verteilerförderer (35) und der zweite Stoppförderer (37) unmittelbar aneinander anschließen.

7. Vorrichtung nach zumindest einem der vorstehenden Ansprüche,
**dadurch gekennzeichnet, dass**
eine Produkt-Erfassungseinrichtung, insbesondere eine Kamera und/oder eine Waage, vorgesehen ist, um die Anzahl und/oder die Position der dem ersten Stoppförderer (33) zugeführten Produkte (45) zu erfassen.

8. Vorrichtung nach zumindest einem der vorstehenden Ansprüche,
**dadurch gekennzeichnet, dass**
der erste Stoppförderer (33) und/oder der zweite Stoppförderer (37) dazu ausgebildet sind, zur Berücksichtigung eines Spurversatzes und/oder unterschiedlicher Breiten ein an einer beliebigen Querposition befindliches Produkt (45) anzuhalten.

9. Vorrichtung nach zumindest einem der vorstehenden Ansprüche,
**dadurch gekennzeichnet, dass**
der Verteilerförderer (35) an jede beliebige Querposition verschiebbar ist.

10. Vorrichtung zum Fördern von Produkten (45), insbesondere Lebensmittelprodukten,
mit wenigstens einer Hauptförderstrecke (13), auf welcher die Produkte (45) zeilenweise entlang einer Förderrichtung (F) gefördert werden,
wenigstens einer Nebenförderstrecke (21) zum bedarfsweisen Komplettieren unvollständiger Produktzeilen (19) und
wenigstens einer Ausschleuseinrichtung zum Ausschleusen unvollständiger Produktzeilen (19) von der Hauptförderstrecke (13) auf die Nebenförderstrecke (21),
**dadurch gekennzeichnet, dass** in die Nebenförderstrecke (21) wenigstens eine Vorrichtung (25) gemäß einem der vorstehenden Ansprüche integriert ist.

11. Verfahren zum Komplettieren eines Formatsatzes (19) von Produkten (45), insbesondere Lebensmittelprodukten, welche zeilenweise auf mehreren Förderspuren (41) entlang einer Förderrichtung (F) gefördert werden, insbesondere mittels einer Vorrichtung gemäß einem der Ansprüche 1 bis 10, mit den Schritten:
Fördern zumindest eines ersten Produkts (45) einer unvollständigen Produktzeile (19) auf einer ersten Förderspur (41) von einem ersten Stoppförderer (33) auf einen Verteilerförderer (35) unter Anhalten wenigstens eines Produkts (45) der unvollständigen Produktzeile (19) auf dem ersten Stoppförderer (33) auf einer anderen Förderspur (41),
Verschieben des Verteilerförderers (35) quer zu der Förderrichtung (F),
Fördern des ersten Produkts (45) von dem verschobenen Verteilerförderer (35) auf einen zweiten Stoppförderer (37), und
Fördern zumindest eines weiteren Produkts (45) der unvollständigen Produktzeile (19) oder einer nachfolgenden Produktzeile (19) auf den zweiten Stoppförderer (37) über den Verteilerförderer (35), während das erste Produkt (45) auf dem zweiten Stoppförderer (37) angehalten wird
**dadurch gekennzeichnet, dass**
das Anhalten von Produkten (45) auf dem ersten Stoppförderer (33) und auf dem zweiten Stoppförderer (37) mittels jeweiliger Stopper (40) durchgeführt wird, welche Produkthebevorrichtungen aufweisen, die zwischen den Riemen der als Riemenförderer ausgebildeten Stoppförderer (33, 37) hindurchgreifen.

12. Verfahren nach Anspruch 11,
**dadurch gekennzeichnet, dass**
der Verteilerförderer (35) vor dem Fördern des weiteren Produkts (45) auf den zweiten Stoppförderer (37) erneut quer zu der Förderrichtung (F) verschoben wird.

13. Verfahren nach Anspruch 11 oder 12,
**dadurch gekennzeichnet, dass**
wenigstens ein Produkt (45) einer ersten Produktzeile (17, 19) von dem ersten Stoppförderer (33), dem Verteilerförderer (35) oder dem zweiten Stoppförderer (37) auf einen nachfolgenden Förderer (35, 37, 39) gefördert wird, während gleichzeitig wenigstens ein Produkt (45) von der ersten Produktzeile (17, 19) oder einer zweiten nachfolgenden Produktzeile (19) von einem vorangehenden Förderer (31, 33, 35) auf den ersten Stoppförderer (33), den Verteilerförderer (35) oder den zweiten Stoppförderer (37) gefördert wird.

## Claims

1. An apparatus (25) for completing a format set (19) of products (45), in particular food products, which are conveyed line-wise on a plurality of conveyor tracks (41) along a conveying direction (F), with the apparatus (25) comprising:
a first and a second stop conveyor (33, 37) which are arranged behind one another, viewed in the conveying direction (F), and are configured to convey products (45) on all conveyor tracks (41) along the conveying direction (F), wherein the first and second stop conveyors (33, 37) are furthermore able, as required, to stop a conveyed product (45) on at least one conveyor track (41) while a product (45) is conveyed onward on at least one other conveyor track (41); and
a distributor conveyor (35) which is arranged, viewed in the conveying direction (F), between the first stop conveyor (33) and the second stop conveyor (37) and which is configured to convey at least one product (45) along the conveying direction (F), wherein the distributor conveyor (35) is displaceable transversely to the conveying direction (F),
**characterized in that**
the first stop conveyor (33) and the second stop conveyor (37) are configured as belt conveyors which have stoppers (40) having product lifting apparatus engaging between the belts for the stopping as required of products (45) on individual conveyor tracks (41).

2. An apparatus in accordance with claim 1,
**characterized in that**
the first stop conveyor (33), the second stop conveyor (37) and/or the distributor conveyor (35) is/are configured as undivided transversely to the conveying direction (F).

3. An apparatus in accordance with claim 1 or claim 2,
**characterized in that**
the first stop conveyor (33), the second stop conveyor (37) and/or the distributor conveyor (35) can only be driven in the conveying direction (F).

4. An apparatus in accordance with any one of the preceding claims,
**characterized in that**
the distributor conveyor (35) has a smaller number of conveyor tracks (41) than the first stop conveyor (33) and/or the second stop conveyor (37), wherein in particular the distributor conveyor (35) has a width which corresponds to one or two conveyor tracks (41).

5. An apparatus in accordance with any one of the preceding claims,
**characterized in that**
the distributor conveyor (35) has a length in relation to the conveying direction (F) which is just sufficient to receive a product (45) and/or which is smaller than the length of the first and/or second stop conveyors (33, 37).

6. An apparatus in accordance with any one of the preceding claims,
**characterized in that**
the first stop conveyor (33), the distributor conveyor (35) and the second stop conveyor (37) directly adjoin one another.

7. An apparatus in accordance with any one of the preceding claims,
**characterized in that**
a product detection device, in particular a camera and/or scales, is provided to detect the number and/or the position of the products (45) supplied to the first stop conveyor (33).

8. An apparatus in accordance with any one of the preceding claims,
**characterized in that**
the first stop conveyor (33) and/or the second stop conveyor (37) are configured to stop a product (45) located at any desired transverse position in order to take account of a track offset and/or different widths.

9. An apparatus in accordance with any one of the preceding claims,
**characterized in that**
the distributor conveyor (35) is displaceable to any desired transverse position.

10. An apparatus for conveying products (45), in particular food products,
having at least one main conveyor path (13) on which the products (45) are conveyed line-wise along a conveying direction (F);
at least one secondary conveyor path (21) for completing incomplete product lines (19) as required; and
at least one expulsion device for expelling incomplete product lines (19) from the main conveyor track (13) onto the secondary conveyor track (21),
**characterized in that**
at least one apparatus (25) in accordance with any one of the preceding claims is integrated into the secondary conveyor path (21).

11. A method for completing a format set (19) of products (45), in particular food products, which are conveyed line-wise on a plurality of conveyor tracks (41) along a conveying direction (F), in particular by means of an apparatus in accordance with any of the claims 1 to 10, comprising the steps:
conveying at least one first product (45) of an incomplete product line (19) on a first conveyer track (41) from a first stop conveyor (33) onto a distributor conveyor (35) while stopping at least one product (45) of the incomplete product line (19) on the first stop conveyor (33) on another conveyor track (41);
displacing the distributor conveyor (35) transversely to the conveying direction (F);
conveying the first product (45) from the displaced distributor conveyor (35) onto a second stop conveyor (37); and
conveying at least one further product (45) of the incomplete product line (19) or of a subsequent product line (19) onto the second stop conveyor (37) via the distributor conveyor (35) while the first product (45) is stopped on the second stop conveyor (37),
**characterized in that**
the stopping of products (45) is carried out on the first stop conveyor (33) and on the second stop conveyor (37) by means of respective stoppers (40) which have product lifting apparatus which engage between the belts of the stop conveyors (33, 37) configured as belt conveyors.

12. A method in accordance with claim 11,
**characterized in that**
the distributor conveyor (35) is displaced again transversely to the conveying direction (F) before the conveying of the further product (45) onto the second stop conveyor (37).

13. A method in accordance with claim 11 or claim 12,
**characterized in that**
at least one product (45) of a first product line (17, 19) is conveyed from the first stop conveyor (33), from the distributor conveyor (35) or from the second stop conveyor (37) onto a subsequent conveyor (35, 37, 39) while at least one product (45) is simultaneously conveyed by a preceding conveyor (31, 33, 35) from the first product line (17, 19) or from a second subsequent product line (19) onto the first stop conveyor (33), onto the distributor conveyor (35) or onto the second stop conveyor (37).

## Revendications

1. Dispositif (25) pour compléter un jeu formaté (19) de produits (45), en particulier de produits alimentaires, qui sont convoyés ligne par ligne sur plusieurs voies de convoyage (41) le long d'une direction de convoyage (F), ledit dispositif (25) comprenant :
un premier et un second convoyeur capables d'être arrêtés (33, 37) qui sont agencés l'un derrière l'autre, vus en direction de convoyage (F) et
sont réalisés pour convoyer des produits (45) le long de la direction de convoyage (F) sur toutes les voies de convoyage (41), dans lequel le premier et le second convoyeur capables d'être arrêtés (33, 37) sont en outre en mesure d'arrêter en cas de besoin un produit convoyé (45) sur au moins une voie de convoyage (41) tandis qu'un produit (45) continue d'être convoyé sur au moins une autre voie de convoyage (41),
et
un convoyeur répartiteur (35) agencé entre le premier convoyeur capable d'être arrêté (33) et le second convoyeur capable d'être arrêté (37), vu dans la direction de convoyage (F), qui est réalisé pour convoyer au moins un produit (45) le long de la direction de convoyage, ledit convoyeur répartiteur (35) étant déplaçable transversalement à la direction de convoyage (F),
**caractérisé en ce que**
le premier convoyeur capable d'être arrêté (33) et le second convoyeur capable d'être arrêté (37) sont réalisés sous forme de convoyeurs à courroie qui, pour arrêter en cas de besoin des produits (45) sur des voies de convoyage individuelles (41), comprennent des arrêts (40) avec des dispositifs de soulèvement de produits qui s'engagent entre les courroies.

2. Dispositif selon la revendication 1,
**caractérisé en ce que** le premier convoyeur capable d'être arrêté (33), le second convoyeur capable d'être arrêté (37) et/ou le convoyeur répartiteur (35) est/sont réalisé(s) de manière non divisée, vus transversalement à la direction de convoyage (F).

3. Dispositif selon la revendication 1 ou 2,
**caractérisé en ce que** le premier convoyeur capable d'être arrêté (33), le second convoyeur capable d'être arrêté (37) et/ou le convoyeur répartiteur (35) est/sont susceptible(s) d'être entraîné(s) exclusivement en direction de convoyage (F).

4. Dispositif selon l'une au moins des revendications précédentes,
**caractérisé en ce que** le convoyeur répartiteur (35) comprend un nombre de voies de convoyage (41) plus petit que le premier convoyeur capable d'être arrêté (33) et/ou que le second convoyeur capable d'être arrêté (37), dans lequel le convoyeur répartiteur (35) présente en particulier une largeur qui correspond à une ou deux voies de convoyage (41).

5. Dispositif selon l'une au moins des revendications précédentes,
**caractérisé en ce que** le convoyeur répartiteur (35) présente une longueur, par référence à la direction de convoyage (F), qui suffit juste pour recevoir un produit (45) et/ou qui est plus petite que la longueur du premier et/ou du second convoyeur capable d'être arrêté (33, 37).

6. Dispositif selon l'une au moins des revendications précédentes,
**caractérisé en ce que** le premier convoyeur capable d'être arrêté (33), le convoyeur répartiteur (35) et le second convoyeur capable d'être arrêté (37) se raccordent directement les uns aux autres.

7. Dispositif selon l'une au moins des revendications précédentes,
**caractérisé en ce qu'**il est prévu un dispositif de détection de produits, en particulier une caméra et/ou une balance, afin de détecter le nombre et/ou la position des produits (45) amenés au premier convoyeur capable d'être arrêté (33).

8. Dispositif selon l'une au moins des revendications précédentes,
**caractérisé en ce que** le premier convoyeur capable d'être arrêté (33) et/ou le second convoyeur capable d'être arrêté (37) sont réalisés pour arrêter un produit (45) qui se trouve à une position transversale quelconque, pour prendre en compte un décalage de voie et/ou des largeurs différentes.

9. Dispositif selon l'une au moins des revendications précédentes,
**caractérisé en ce que** le convoyeur répartiteur (35) est déplaçable jusqu'à toute position transversale quelconque.

10. Dispositif pour convoyer des produits (45), en particulier des produits alimentaires,
comprenant au moins un trajet de convoyage principal (13) sur lequel les produits (45) sont convoyés ligne par ligne le long d'une direction de convoyage (F),
au moins un trajet de convoyage annexe (21) pour compléter en cas de besoin des lignes de produits incomplètes (19), et
au moins un dispositif formant sas pour sortir des lignes de produits incomplètes (19) depuis le trajet de convoyage principal (13) vers le trajet de convoyage annexe (21),
**caractérisé en ce que**
au moins un dispositif (25) selon l'une des revendications précédentes est intégré dans le trajet de convoyage annexe (21).

11. Procédé pour compléter un jeu formaté (19) de produits (45), en particulier de produits alimentaires, qui sont convoyés ligne par ligne sur plusieurs voies de convoyage (41) le long d'une direction de convoyage (F), en particulier au moyen d'un dispositif selon l'une des revendications 1 à 10, comprenant les étapes consistant à :
convoyer au moins un premier produit (45) d'une ligne de produits incomplète (39) sur une première voie de convoyage (41), depuis un premier convoyeur capable d'être arrêté (33) vers un convoyeur répartiteur (35) en arrêtant au moins un produit (45) de la ligne de produits incomplète (19) sur le premier convoyeur capable d'être arrêté (33) sur une autre voie de convoyage (41),
déplacer le convoyeur répartiteur (35) transversalement à la direction de convoyage (F),
convoyer le premier produit (45) depuis le convoyeur répartiteur (35) déplacé, vers un second convoyeur capable d'être arrêté (37), et
convoyer au moins un autre produit (45) de la ligne de produits incomplète (19) ou d'une ligne de produits (19) suivante, vers le second convoyeur capable d'être arrêté (37) au moyen du convoyeur répartiteur (35), pendant que le premier produit (45) sur le second convoyeur capable d'être arrêté (37) est arrêté,
**caractérisé en ce que**
l'arrêt de produits (45) sur le premier convoyeur capable d'être arrêté (33) et sur le second convoyeur capable d'être arrêté (37) est exécuté au moyen d'arrêts respectifs (40), qui comprennent des dispositifs de soulèvement de produits, qui s'engagent entre les courroies des convoyeurs capables d'être arrêtés (33, 37) réalisés sous forme de convoyeurs à courroie.

12. Procédé selon la revendication 11,
**caractérisé en ce que** le convoyeur répartiteur (35) est à nouveau déplacé transversalement à la direction de convoyage (F) avant de convoyer la suite du produit (45) vers le second convoyeur capable d'être arrêté (37).

13. Procédé selon la revendication 11 ou 12,
**caractérisé en ce qu'**au moins un produit (45) d'une première ligne de produits (17, 19) est convoyé par le premier convoyeur capable d'être arrêté (33), par le convoyeur répartiteur (35) ou par le second convoyeur capable d'être arrêté (37) vers un convoyeur successif (35, 37, 39), tandis que simultanément au moins un produit (45) de la première ligne de produits (17, 19) ou d'une seconde ligne de produits successive (19) est convoyé par un convoyeur précédent (31, 33, 35) vers le premier convoyeur capable d'être arrêté (33), vers le convoyeur répartiteur (35) ou vers le second convoyeur capable d'être arrêté (37).
